# EUROPÄISCHE PATENTSCHRIFT

(11) **EP 1 310 682 B1**
(45) Veröffentlichungstag und Bekanntmachung des Hinweises auf die Patenterteilung: **14.06.2006**
(21) Anmeldenummer: 02024853.0
(22) Anmeldetag: 08.11.2002
(51) Int. Cl.: B42F 15/06, F16B 2/06, F16B 5/06

(54) **Halterung für sphärische und flache Gegenstände**
Holding device for spherical and flat objects
Fixation pour des objets sphériques ou plats

(30) Priorität: 08.11.2001 DE 20118073 U
(43) Veröffentlichungstag der Anmeldung: 14.05.2003
(73) Patentinhaber: Mekyska, Erich, 75180 Pforzheim (DE)
(72) Erfinder: Mekyska, Erich, 75180 Pforzheim (DE)
(74) Vertreter: Ackmann, Günther

(56) Entgegenhaltungen:
- EP-A- 0 438 895
- EP-A- 0 651 966
- WO-A-01/56751
- GB-A- 2 038 613
- US-A- 4 189 048

## Beschreibung

Die Erfindung betrifft eine Halterung für sphärische und flache Gegenstände, bestehend aus zwei einander gegenüberliegenden, beabstandeten Klemmflächen, welche durch einen Trägerkörper gehalten oder Bestandteil des Trägerkörpers sind.

Eine derartige Halterung ist aus der WO-A-01/56751 bekannt.

Halterungen für sphärische oder flache Gegenstände sind in einer Vielzahl bekannt, jedoch handelt es sich in der Regel um schwere und unhandliche Halterungen, die sehr viel Platz benötigen oder aber die Gegenstände nur lose aufnehmen können. Es ist jedoch gegebenenfalls notwendig, die Gegenstände in einer ungünstigen Position zu halten, beispielsweise in einer vertikalen Position, ohne dass die aufzunehmenden Gegenstände herausfallen können. Hierbei sollte die Halterung möglichst universell verwendbar und beispielsweise zur Aufnahme von Kleingerätschaften, Tuben, Zahnbürsten, Schreibstiften, Blätter oder dergleichen geeignet sein. In den meisten Fällen fehlt ein geeigneter Platz oder Aufbewahrungsort, um die notwendigen Utensilien bzw. Gegenstände in ausreichender Menge und für jedermann leicht zugänglich zur Verfügung zu stellen. Auch im Zeitalter der EDV-Technik ist beispielsweise eine Papierhalterung und gegebenenfalls eine Schreibgeräthalterung unentbehrlich. Insbesondere dort, wo kurze Notizen erforderlich sind, wie beispielsweise im privaten Haushalt oder Büroräumen neben einem Telefonapparat, einem Faxgerät oder dergleichen, kann eine Halterung wertvolle Dienste erweisen. Halterungen sind beispielsweise für den einen oder anderen Gegenstand bekannt, die z. B. für Schreibgeräte aus Schlaufen oder Löchern in einem Trägerkörper bestehen können, diese besitzen aber den grundsätzlichen Nachteil, dass die Halterung meistens nur für eine bestimmte Größe oder einen bestimmten Durchmesser des Gegenstands vorgesehen sind und bei Abweichungen von dieser vorgegebenen Größe keine Passgenauigkeit mehr gegeben ist bzw. der Gegenstand lediglich in der Halterung zu liegen kommt und nicht richtig gehalten wird. Ähnlich verhält es sich mit dem erforderlichen Schreibpapier, welches in den meisten Fällen nicht griffbereit zur Verfügung steht und zur Abfassung von Notizen auf Zeitungsrändern oder dergleichen führt. Soweit Papierhalter bekannt sind, beschränken diese sich auf die Einfassung eines Blocks, auf Klebezettel oder Zettelboxen, die aber auf einer ebenen Unterlage aufliegen müssen. Soweit eine nahezu senkrechte Befestigungsart gewählt wird, können beispielsweise nur Haftmagnete auf einer metallischen Unterlage verwendet werden, die aber nur für relativ leichte Gegenstände mit einem geringen Gewicht, wie beispielsweise ein einzelnes Papierblatt, geeignet sind.

Aus der eingangs genannten WO-A-01/56751 ist eine Halterung für Werkzeuge bekannt, die aus parallel zueinander ausgerichteten Seitenwänden besteht, an deren Innenseite mehrere jeweils paarweise gegenüberliegende elastische Halterungen befestigt sind. Die Halterungen weisen an ihrer vorderen Kante jeweils eine korrespondierende Wellenform auf, sodass die Wellenberge in den Wellentälern des gegenüberliegenden Befestigungselements zu liegen kommen. Somit können beispielsweise Handwerkzeuge zwischen die elastischen Halterungen von oben eingeschoben und ebenso leicht wieder entnommen werden.

Aus der europäischen Patentanmeldung EP-A-0 438 895 ist eine Halterung bekannt, die zwei gegenüberliegende Planflächen aufweist, an denen mehrere aufeinander zulaufende Fäden oder fingerartige Borsten vorhanden sind, die sich an ihren vorderen Enden zumindest teilweise berühren. Ebene Gegenstände können somit seitlich zwischen den hervorstehenden Fäden geschoben werden, um diese zu halten. Im täglichen Gebrauch der Halterung hat sich jedoch herausgestellt, dass die Fäden beziehungsweise Borsten sehr leicht durch harte Gegenstände abgeschert werden können oder ihre elastische Wirkung verlieren, sodass nach einiger Benutzungszeit keine ausreichende Halterung der aufzunehmenden Gegenstände gewährleistet ist.

Der Erfindung liegt die Aufgabe zugrunde, eine Halterung für flache Gegenstände aufzuzeigen, die leicht einklemmbar und ebenso leicht wieder entnehmbar sind, wobei die Klemmfunktion in ausreichendem Maße auch über einen langen Zeitraum gewährleistet ist.

Erfindungsgemäß ist zur Lösung der Aufgabe vorgesehen, dass die Klemmflächen Haltemittel in Form eines flachen Grundkörpers mit mehreren angeformten Lippen aufweisen, welche gerade und parallel zum Grundkörper verlaufende Vorderkanten besitzen wobei die Vorderkanten durchgehend oder unterbrochen ausgebildet sind und, wobei sich die gegenüberliegenden Lippen mit ihren Vorderkanten gegenseitig berühren oder versetzt zwischen den Lippen zuliegen kommen. Weitere vorteilhafte Ausgestaltungen ergeben sich aus den Unteransprüchen.

Der erfindungsgemäße Gegenstand besteht somit aus einem Trägerkörper der zwei gegenüberliegende beabstandete Klemmflächen aufweist, die mit Haltemitteln in Form eines flachen Grundkörpers von mehreren angeformten Lippen versehen sind. Hierdurch besteht in vorteilhafter Weise die Möglichkeit, dass die beiden Klemmflächen in einem größeren Abstand zueinander angeordnet werden und die Lippen eine entsprechende Länge aufweisen, sodass der zwischen den Klemmflächen liegende Zwischenraum durch die Lippen nahezu vollständig erfasst wird und somit äußerst flache Gegenstände wie beispielsweise ein einzelnes Papierblatt oder aber ein größerer Stapel von Papier oder aber auch eine Scheckkarte und wesentlich dickere Gegenstände in ein und derselben Halterung aufgenommen werden können. Die angeformten Lippen überbrücken hierbei den Zwischenraum zwischen den beiden Klemmflächen und ermöglichen eine direkte Anlage an den aufzunehmenden Gegenstand und eine sichere Halterung. Hierbei kann der Gegenstand sowohl in einer horizontalen als auch in einer vertikalen oder einer zur Vertikalen geneigt verlaufenden Position befestigt werden. Die Halterung eignet sich somit in vorteilhafter Weise zur Aufnahme von Karten, Zeichnungen aber auch zur Aufnahme von Tuben, Scheckkarten, Visitenkarten oder anderen flachen Gegenständen, welche gegebenenfalls auch in mehrfacher Anordnung übereinanderliegend angeordnet sein können. Die Lippen sind hierbei in vorteilhafter Weise einstückig mit dem sie aufnehmenden Grundkörper verbunden, sodass unter Verwendung eines elastischen Materials eine ausreichende Eigenelastizität vorliegt, um die betreffenden Gegenstände aufnehmen zu können. Die einstückig an den Grundkörper angeformten Lippen können hierbei parallel, wellen- oder zickzackförmig verlaufend ausgebildet sein, wobei die Abstände benachbarter Lippen gleichbleibend sind.

In Ausgestaltung der Erfindung ist vorgesehen, dass die Lippen zum Grundkörper senkrecht oder unter einem Winkel von 20 bis 50 Grad angeordnet sind und dass die Lippen durchgehende oder unterbrochene Vorderkanten aufweisen. Somit besteht das elastische Haltemittel aus einem flachen Körper mit mehreren einstückig angeformten und parallel verlaufenden Lippen, die unter einem bestimmten Winkel angeordnet sind und somit das Einführen der Gegenstände erleichtern bzw. einen ausreichenden Widerstand entgegensetzen, damit die Gegenstände nicht herausfallen können. Die Lippen kommen hierbei mit ihren äußeren Kanten auf den Gegenständen zu liegen, sodass sie quasi einklemmend gehalten werden. Ein besonderer Vorteil ergibt sich bei dieser Halterung, wenn ein Stapel von mehreren Papierblättern zwischen die Klemmflächen eingeschoben wird, weil aufgrund der mehrfachen Anlage der parallel verlaufenden Lippen bzw. Vorderkanten ein einzelnes Blatt aus dem vorhandenen, löse geschichteten Papierstapel entfernt werden kann, ohne das gleich der vollständige Stapel bzw. weitere Papiere aus der Halterung herausgezogen werden. Die Lippen können hierbei schräg verlaufend oder vorzugsweise quer zur Einführungsrichtung liegend angeordnet sein, wobei der Neigungswinkel der Lippen bei den gegenüberliegenden Haltemitteln sich in der Art ergänzt, dass sich die Lippen mit ihren Enden entweder gegenseitig berühren oder in den jeweils gegenüberliegenden Zwischenraum hineinragen. Hierdurch wird gewährleistet, dass die Lippen vollständig an dem aufzunehmenden Gegenstand beispielsweise einem Papierstapel oder einer Zeitung oder einer Landkarte anliegen. Dadurch, dass die eingelegten Gegenstände kein allzu großes Gewicht aufweist, erfolgt eine sichere Halterung durch die Andruckkraft der elastischen Lippen mit den o.g. Vorteilen. Hierbei können mehrere flache übereinanderliegende Gegenstände aufgenommen und jeweils einzeln wieder herausgezogen werden, und zwar sowohl nach unten als auch schräg zur Seite, ohne dass die verbleibenden Gegenstände gleichzeitig mit herausgezogen werden, weil diese zuverlässig und sicher von den übrigen Lippen weiterhin eingeklemmt werden. Dieser Effekt ist darauf zurückzuführen, dass bei dem Herausziehen eines einzelnen Gegenstandes, beispielsweise eines Papierblatts immer eine größere Anzahl von Lippen auf den übrigen Papierstapel einwirkt und ein Herausrutschen durch die Andruckkraft verhindert wird. Die Lippen können hierbei eine durchgehende Vorderkante aufweisen oder im Bedarfsfall aus einer durch Unterbrechungen ausgebildeten Vorderkante bestehen, sodass die Eigenelastizität weiterhin erhöht wird. Soweit Unterbrechungen vorhanden sind, können diese von Lippe zu Lippe versetzt angeordnet sein.

In weiterer Ausgestaltung der Erfindung ist vorgesehen, dass die Haltemittel mit den Lippen auf den Klemmflächen flächenbündig oder in einer Vertiefung einliegend befestigt sind, beispielsweise aufgeklebt, sind. Durch diese Maßnahme steht nahezu der vollständige Zwischenraum zwischen den Klemmflächen zur Aufnahme von Gegenständen zur Verfügung.

In besonderer Ausgestaltung der Erfindung ist vorgesehen, dass der Trägerkörper einerseits zur Aufnahme der Haltemittel und andererseits zur Aufnahme einer Klemmvorrichtung zur Aufnahme und Halterung von runden oder eckigen Gegenständen vorgesehen ist. Durch die erfindungsgemäße Kombination von einer Halterung für flache Gegenstände mit einer Klemmvorrichtung zur Aufnahme von runden oder eckigen Gegenständen wird eine vorteilhafte Kombination vorgegebenen, die beispielsweise gleichzeitig zur Aufnahme von einer Zahnbürste und einer Zahnpastatube oder aber insbesondere zur Aufnahme eines Schreibgeräts und des hierzu notwendigen Papiers verwendet werden kann. Durch die erfindungsgemäße Kombination von Schreibgerätehalter mit Papierhalter wird hierbei eine bauliche Einheit geschaffen, die beispielsweise mit einem Klebepad in einer vertikalen oder horizontalen Position befestigt werden kann.

In weiterer Ausgestaltung der Erfindung ist vorgesehen, dass der Trägerkörper aus einer oberen Abdeckplatte und einem unteren Bodenteil besteht, welche durch Klemmmittel zusammengehalten sind, wobei das Bodenteil und/oder die Abdeckplatte eine Ausnehmung aufweisen, die nach dem Zusammenbau eine Schlitzführung bilden und innerhalb der Schlitzführung die beiden Klemmflächen ausgebildet sind. Ein Papierbündel kann somit in die Schlitzführung eingeschoben werden und wird durch die Haltemittel in jeder beliebigen Position gehalten, während hingegen ein Schreibgerät durch die weitere Klemmvorrichtung gehalten wird.

In weiterer Ausgestaltung der Erfindung ist vorgesehen, dass die Abdeckplatte und das Bodenteil durch am Rand verteilt liegende hakenförmige Vorsprünge oder Stifte, welche in korrespondierenden Ausnehmungen oder Bohrungen einrasten, zusammengehalten werden. Die Trägerplatte der Klemmvorrichtung und der Trägerkörper zur Aufnahme der Klemmvorrichtung bzw. der Halterung können hierbei einstückig oder gegebenenfalls zweiteilig ausgebildet sein. Hierbei ist es denkbar, dass entweder die Abdeckplatte oder das Bodenteil sich nur teilweise über das korrespondierende Gegenstück erstreckt. Beispielsweise kann die Abdeckplatte in einer rechteckförmigen Aussparung des Bodenteils befestigt werden oder aber das Bodenteil in einer korrespondierenden Aussparung der Abdeckplatte, sodass nicht unbedingt zwei gleichgroße annähernd spiegelsymmetrische Bauteile verwendet werden müssen. Sollte der Trägerkörper oder die Trägerplatte als zweiteilige Variante ausgeführt sein, erfolgt die Aufnahme der Trägerplatte in dem Trägerkörper beispielsweise innerhalb eines Durchbruchs, indem die Trägerplatte einklebbar oder gegebenenfalls einklemmbar ist. Hierdurch kann in einer formschönen Variante beispielsweise ein Schreibgeräte- und Papierhalter geschaffen werden, der äußerst zweckdienlich ist und in einer beliebigen Position fixiert werden kann und zudem die Möglichkeit bietet, mit einer Hand das Schreibgerät herauszunehmen und gegebenenfalls ein einzelnes Blatt nach erfolgter Beschriftung oder unbeschriftet aus der Papierhalterung herauszuziehen. Zusätzlich besteht die Möglichkeit den Trägerkörper zur Aufnahme der Klemmvorrichtung oder die Klemmvorrichtung selbst mit weiterem Zubehör auszustatten. Beispielsweise kann ein Spiralhebel aus Kunststoff vorgesehen werden, mit dem der Schreibstift unverlierbar oder gegen Mitnahme zusätzlich gesichert ist. Ebenso ist es denkbar, dass in Abhängigkeit vom Verwendungszweck weitere Haken oder Ösen vorgesehen sind, die zum Aufhängen beliebiger Gegenstände verwendet werden können.

In weiterer Ausgestaltung der Erfindung ist vorgesehen, dass die Klemmvorrichtung zur Aufnahme und Halterung von runden oder eckigen Gegenständen, beispielsweise Schreibgeräten, Werkzeugen, Zahnbürsten, Nassrasierer, Nagelfeilen oder dergleichen vorgesehen ist und aus einer Trägerplatte besteht, auf der sich zwei Klemmelemente befinden, wovon mindestens ein Klemmelement verschiebbar und federbeaufschlagt gelagert ist und wobei die Trägerplatte und das zumindest eine Klemmelement korrespondierende Führungsmittel aufweist. Dadurch, dass zumindest eine Klemmbacke beweglich auf dem Trägerkörper bzw. der Trägerplatte angeordnet ist und unter Federvorspannung geführt wird, können diese zusammengedrückt werden und können sich in einer Ruheposition zumindest im unteren Bereich teilweise berühren, sodass beide Klemmelemente in einer definierten Position zueinander zu liegen kommen. Die Klemmbacken weisen hierbei eine relativ große Fläche gegenüber der Trägerplatte bzw. dem Trägerkörper auf, sodass entweder eine große vollflächige Auflagemöglichkeit oder eine große hohlflächige Auflagemöglichkeit mit einem beabstandeten Rand erzielt wird und zu einer einwandfreien Gleitführung der Klemmbacken auf der Trägerplatte bzw. dem Trägerkörper führt. Alternativ besteht die Möglichkeit, dass beide Klemmelemente bzw. Klemmbacken verschiebbar innerhalb einer Führung angeordnet sind. Durch die Gleitführung können die aufzunehmenden Schreibstifte oder ähnliche Gebrauchsgegenstände durch einfaches Eindrücken aufgenommen werden und ebenso leicht wieder entfernt werden. Vorzugsweise ist der Schreibgerätehalter mit zwei Klemmbacken ausgestattet, die einander gegenüberstehen und sich in einer Ruheposition zumindest im unteren Bereich teilweise berühren, damit die Klemmbacken im oberen Einführungsbereich einen kleinen Spalt zur erleichterten Einführung des Gegenstands bilden. Die Führung der Klemmbacken besteht aus einem Führungssockel und/oder einer erhabenen Führungsfläche, beispielsweise einem Wulst auf der Trägerplatte oder gegebenenfalls dem Trägerkörper, wobei der Führungssockel in mindestens einer Nut oder einem Schlitz der Trägerplatte eingreift und der Führungssockel mindestens zwei entgegensetzt ausgerichtete Haltekrallen aufweist, die die Nut oder den Schlitz hintergreifen. Alternativ kann der Führungssockel aus einem Gleitschuh, einer Dreieck- oder Schwalbenschwanzführung bestehen, wobei die Nut oder der Schlitz eine korrespondierende Aufnahmefläche aufweist. Durch die vorgenannten Maßnahmen wird verhindert, dass der Führungssockel der Klemmbacken aus der Trägerplatte bzw. dem Trägerkörper herausrutschen kann und somit der Zusammenhalt verloren geht. Alternativ besteht die Möglichkeit, dass die Führung der Klemmbacken zusätzlich aus mindestens einer Bohrung in dem Quersteg oder dem Führungssockel besteht, um mindestens einen, in der Trägerplatte gelagerten Bolzen aufzunehmen, auf dem die zumindest eine Klemmbacke hin und her gleitet. Diese alternative Ausführungsform unterstützt die Leichtgängigkeit der Klemmbacken durch einen Bolzen, der in einem gewissen Abstand zur Führungsfläche der Trägerplatte bzw. des Trägerkörpers angeordnet ist.

Zur erleichterten Einführung der Schreibgeräte und einer verbesserten Handhabung ist vorgesehen, dass die Klemmbacken zwei sich gegenüberliegende und spiegelbildlich ausgebildete Innenflächen aufweisen, die zur Bewegungsrichtung des Gegenstands hin eine Abschrägung aufweisen, und im mittleren Bereich rund, eckig oder elliptisch ausgeformt sind. Im Übergangsbereich zwischen der Abschrägung und dem ausgeformten Bereich ist eine Verengung ausgebildet, die quasi das Umschließen des Schreibgeräts ermöglicht. Die vorhandene Abschrägung an den Klemmbacken erleichtert, wie bereits ausgeführt, die Zuführung und Einbringung der Gegenstände, während die Verengung ein leichtes Auseinanderdrücken der Klemmbacken zur Einführung erforderlich macht, sodass nach dem Zusammengleiten der Klemmbacken der runde, dreieckig oder elliptisch geformte Bereich an den Gegenstand, beispielsweise einem Schreibgerät, zu liegen kommt und ein Herausrutschen verhindert. Die vorhandene Verengung kann hierbei beabstandet ausgeführt sein oder aber auch zu einer Anlage der beiden gegenüberstehenden Klemmbacken führen.

Um eine gleichmäßige Andruckkraft auf die Klemmbacken und damit auf die Schreibgeräte zu erzielen, ist vorgesehen, dass für die Federvorspannung zumindest eine Feder verwendet wird, die in einer Führung zwischen den Konsolen oder den Führungssockeln und der Stützkonsole oder dem Stützrand des Trägerkörpers angeordnet ist.

Um einen weiterhin verbesserten Halt zu gewährleisten, können die Klemmbacken auf der Innenfläche eine Riffelung, Aufrauhung oder Gummibeschichtung aufweisen. Die Trägerplatte bzw. der Trägerkörper können hierbei rund oder ggf. eckig ausgebildet sein, wobei die Trägerplatte in einem korrespondierenden Durchbruch des Trägerkörpers aufgenommen wird. Die weitere Formgebung des Trägerkörpers ist unabhängig und zweckmäßig zu gestalten.

Die erfindungsgemäße Halterung wird nachfolgend anhand der Figuren näher erläutert.

Es zeigt:
- Figur 1: in einer Explorationszeichnung die erfindungsgemäße Halterung mit Klemmvorrichtung,
- Figur 2: in drei Teilansichten die schematische Wirkungsweise der Haltemittel und
- Figur 3: die Halterung gemäß Figur 1 in drei Ansichten.

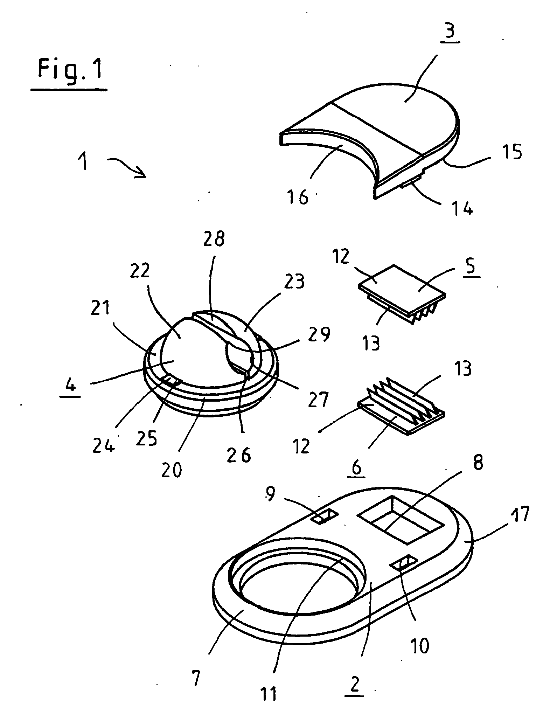

Figur 1 zeigt eine erfindungsgemäße Halterung 1 in einer perspektivischen Ansicht, bestehend aus einer Bodenplatte 17 mit einer oberen Abdeckplatte 3, einer Klemmvorrichtung 4 sowie zwei korrespondierenden Haltemitteln 5,6 zur Halterung von einzelnen oder mehreren nicht dargestellten Gegenständen.

Der Trägerkörper 2 wird hierbei durch die Bodenplatte 17 und die obere Abdeckplatte 3, welche die Bodenplatte 17 teilweise überdeckt, gebildet.

Die Bodenplatte 17 ist länglich und flach ausgebildet und weist endseitig jeweils eine Abrundung 7 auf. Ferner besitzt die Bodenplatte 17 eine rechteckförmige Ausnehmung 8 sowie zwei Aussparungen 9,10 und einen runden Durchbruch 11, der stufenförmig abgesetzt ist. Der Durchbruch 11 ist hierbei korrespondierend zu der Klemmvorrichtung 4 ausgebildet, sodass diese eingeklebt oder ggf. einklemmend aufgenommen werden kann. In die Ausnehmung 8 wird ein unteres Haltemittel 6 in Form eines elastischen Körpers eingesetzt und ggf. eingeklemmt oder eingeklebt. Das Haltemittel 6 besteht beispielsweise aus elastischem Kunststoff mit einem rechteckförmigen Grundkörper 12 an den mehrere parallel verlaufende Lippen 13 angeformt sind und einen Winkel zur Ebene des Grundkörpers 12 aufweisen. Das obere Haltemittel 5 ist spiegelsymmetrisch ausgebildet, wobei die Lippen 13 sich mit den unteren Lippen 13 des Haltemittels 6 entweder berühren können oder durch einen entsprechenden Zuschnitt zwischen den einzelnen Lippen 13 zu liegen kommen. Das Haltemittel 5 wird in eine entsprechende Ausnehmung der oberen Abdeckplatte 3 eingeklemmt oder ggf. eingeklebt, welche der Form des Trägerkörpers 2 angepasst ist und mit zwei Haltekrallen 14 in die Ausnehmungen 9,10 des Trägerkörpers 2 einrastend eingreift. Die Abdeckplatte 3 mit ihrem Haltemittel 5 sowie die Bodenplatte 17 mit dem Haltemittel 6 bilden zusammen die Halterung 1 für flache Gegenstände, beispielsweise ein Papierbündel, wobei zum Einführen des Papierstapels zwischen Bodenplatte 17 und oberer Abdeckplatte 3 durch einen vorhandenen Rücksprung 15 der Abdeckplatte 3 eine Schlitzführung ausgebildet ist. Die Abdeckplatte 3 ist an die Formgebung des Schreibgerätehalters 4 insoweit angepasst, dass eine Rundung 16 an dem Schreibgerätehalter 4 zu liegen kommt.

Die Klemmvorrichtung 4 besteht im Wesentlichen aus einer unteren Trägerplatte 20, welche beispielsweise aus einem oberen und unteren Plattenteil bestehen kann und eine Abstufung aufweisen, die korrespondierend zu der Abstufung des Durchbruchs 11 der Bodenplatte 17 verläuft. Auf der Oberseite 21 der Klemmvorrichtung 4 sind zwei Klemmelemente 22,23 angeordnet, die mit ihrer unteren Seite entweder vollflächig oder mit ihrem Rand auf der Oberseite 21 verschiebbar aufliegen. Zur Erzielung einer verbesserten Führung ist auf der Oberseite 21 ein im Bereich des Verschiebungswegs der Klemmelemente 22,23 ausgebildeter Wulst 24 angeordnet. Die Klemmelemente 22,23 weisen hierzu eine korrespondierende Aussparung 25 auf. Die Klemmelemente 22,23 bilden zusammen ein Halbkugel bzw. jeweils einzeln eine Viertelkugel und weisen auf ihrer einander zugewandten Innenfläche 26 eine spiegelbildliche Gestaltung auf, die aus einem mittleren abgerundeten Bereich 27, einer oberen Abschrägung 28 sowie einer Verengung 29 besteht. Die Klemmelemente 22,23 werden in einer nicht einsehbaren Führung des Trägerkörpers 20 geführt und durch eine in der Trägerplatte 20 angeordnete nicht einsehbare Feder in der Art vorgespannt, dass sie eine mittige Position auf der Trägerplatte 20 einnehmen. Auf Grund der Verschiebbarkeit kann beispielsweise ein Schreibgerät in die Abschrägung 28 eingedrückt werden, sodass die beiden Klemmelemente 22,23 auseinander gleiten und der mittlere abgerundete Bereich 27 um das Schreibgerät zu liegen kommt, sodass dieses sicher und fest eingeklemmt werden kann. Dadurch, dass die Klemmelemente 22,23 oder zumindest ein Klemmelement 22 oder 23 verschiebbar auf der Oberseite 21 des Trägerkörpers 20 ausgebildet ist, können somit im Durchmesser unterschiedliche Schreibgeräte sicher aufgenommen werden.

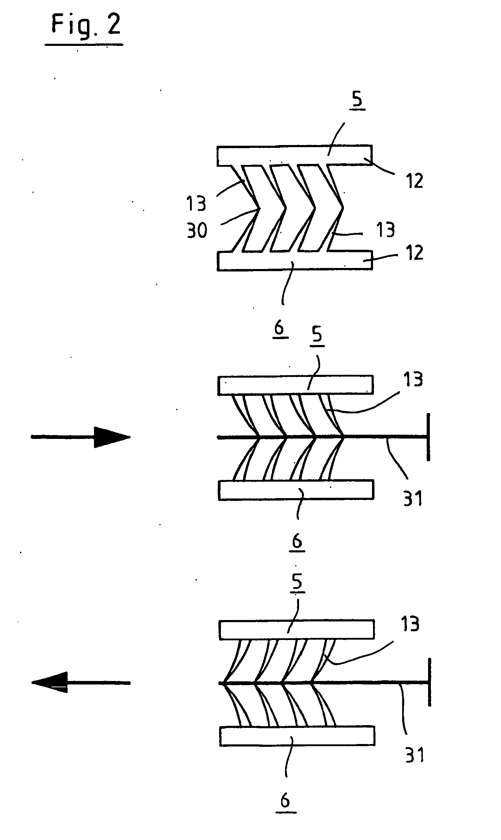

Figur 2 zeigt in einer oberen Abbildung die beiden einander gegenüberliegenden Haltemittel 5,6 mit ihren Lippen 13, welche sich mit ihren Vorderkanten 30 berühren. Alternativ besteht die Möglichkeit, dass die Vorderkanten jeweils versetzt zwischen den Lippen 13 zu liegen kommen. Die mittlere Teilfigur zeigt ebenfalls die Anordnung der Haltemittel 5,6, wobei zwischen den Lippen 13 ein einzelnes Papierblatt 31 eingeschoben ist, hierdurch werden die Lippen 13 in Bewegungsrichtung leicht vorgespannt. Die untere Teilfigur zeigt ebenfalls die beiden Haltemittel 5,6 mit ihren Lippen 13 während des Herausziehens eines einzelnen Papierblatts 31. Hierdurch wird die Neigung der Lippen 13 in Bewegungsrichtung auf Grund der vorhandenen Elastizität verlagert, sodass bis zur vollständigen Endnahme des Papierblatts 31 eine sichere Führung und Halterung gegeben ist. Für den Fall, dass mehrere Papierblätter 31 zuvor zwischen die Haltemittel 5,6 eingelegt worden sind, besteht die Möglichkeit ein oberes oder unteres einzelnes Papierblatt 31 herauszuziehen, wobei jeweils die anliegenden Lippen 13 in Bewegungsrichtung gedrückt werden.

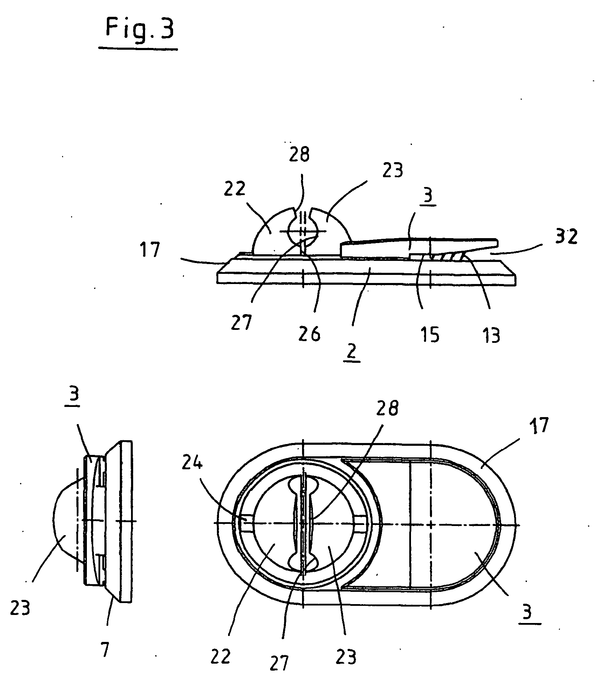

Figur 3 zeigt die erfindungsgemäße Halterung nach dem Zusammenbau in drei Ansichten. Die Halterung 1 besteht aus dem Trägerkörper 2, welcher durch die Bodenplatte 17 und Abdeckplatte 3 gebildet wird, wobei die Abdeckplatte 3 mit einem Rücksprung 15 versehen ist, sodass die Haltemittel 5,6 einerseits in der Abdeckplatte 3 und andererseits in der Bodenplatte 17 in einer tiefer liegenden Ausnehmung 8 aufgenommen werden können. Durch den Rücksprung 15 sind die beiden Teile des Trägerkörpers 2 insoweit beabstandet, dass beispielsweise flache Gegenstände in die Schlitzführung 32 eingeschoben werden können und durch die Haltemittel 5,6 bzw. die angeformten Lippen 13 aufgenommen und gehalten werden. Ferner ist der Trägerkörper 2 mit einer Klemmvorrichtung 4 ausgestattet, welche aus einer Trägerplatte 20 mit zwei Klemmelementen 22,23 besteht, zwischen denen runde oder eckige Gegenstände, beispielsweise Schreibgeräte, aufgenommen werden können. Die beiden als Viertelkugel ausgebildeten Klemmelemente 22,23 sind schiebebeweglich auf der Trägerplatte 20 angeordnet, wobei durch einen Wulst 24 eine Führung zur Stabilisierung der Bewegungsrichtung vorhanden ist, die in einer Aussparung 25 der Klemmelemente 22,23 zu liegen kommt. Die Klemmelemente 22,23 weisen auf den einander zugewandten Innenflächen einen annähernd runden mittleren Bereich 27, eine Verengung 29 sowie an der oberen Kante eine Abschrägung 28 zur besseren Einführung der aufzunehmenden Gegenstände auf. Zumindest eines der Klemmelemente 22,23 ist hierbei schiebebeweglich auf der Trägerplatte 20 angeordnet, sodass beim Einführen des Gegenstandes durch die aufgewandte Kraft die Klemmelemente auseinandergedrückt werden und nach erfolgter Einführung und Rückführung der bewegten Klemmelemente 22,23 der ausgeformte mittlere Bereich 27 um den Gegenstand zu liegen kommt. Die erfindungsgemäße Halterung 1 mit Klemmvorrichtung 4 stellt eine formschöne und zweckmäßige Kombination zur Aufnahme beispielsweise eines Schreibgerätes oder einzelner Papierblätter dar, wobei auch andere Gegenstände wie Zahnbürsten, Zahnpastatuben, Schreibstifte, Landkarten oder dergleichen aufgenommen werden können. Die Halterung 1 mit Klemmvorrichtung 4 kann hierbei mit Hilfe von Klebepads beispielsweise auf einer ebenen Tisch- oder Wandfläche aufgeklebt werden, sodass eine Anbringung überall dort möglich ist, wo eine zweckentsprechende Einsatzmöglichkeit vorliegt.

### Bezugszeichenliste

- 1: Halterung
- 2: Trägerkörper
- 3: Abdeckplatte
- 4: Klemmvorrichtung
- 5: Haltemittel
- 6: Haltemittel
- 7: Abrundung
- 8: Ausnehmung
- 9: Aussparung
- 10: Aussparung
- 11: Durchbruch
- 12: Grundkörper
- 13: Lippe
- 14: Haltekralle
- 15: Rücksprung
- 16: Rundung
- 17: Bodenplatte
- 20: Trägerplatte
- 21: Oberseite
- 22: Klemmelement
- 23: Klemmelement
- 24: Wulst
- 25: Aussparung
- 26: Innenfläche
- 27: mittlerer Bereich
- 28: Abschrägung
- 29: Verengung
- 30: Vorderkante
- 31: Papierblatt
- 32: Schlitzführung

## Patentansprüche

1. Halterung (1) für sphärische und flache Gegenstände, bestehend aus zwei einander gegenüber liegenden, beabstandeten Klemmflächen, welche durch einen Trägerkörper (2) gehalten oder Bestandteil des Trägerkörpers (2) sind,
**dadurch gekennzeichnet,**
**dass** die Klemmflächen Haltemittel (5, 6) in Form eines flachen Grundkörpers (12) mit mehreren, angeformten Lippen (13) aufweisen, welche gerade und parallel zum Grundkörper (12) verlaufende Vorderkanten besitzen, wobei die Vorderkanten durchgehend oder unterbrochen ausgebildet sind und wobei sich die gegenüberliegenden Lippen (13) mit ihren Vorderkanten (30) gegenseitig berühren oder versetzt zwischen den Lippen (13) zu liegen kommen.

2. Halterung nach Anspruch 1,
**dadurch gekennzeichnet,**
**dass** die Lippen (13) einstückig mit dem Grundkörper (12) verbunden sind.

3. Halterung nach Anspruch 1 oder 2,
**dadurch gekennzeichnet,**
**dass** die Lippen (13) parallel, wellen- oder zickzackförmig verlaufend ausgebildet sind, wobei die Abstände benachbarter Lippen (13) gleichbleibend sind und/oder dass die Lippen (13) zum Grundkörper (12) senkrecht oder unter einem Winkel von 20 bis 50 Grad angeordnet sind.

4. Halterung nach Anspruch 1, 2 oder 3,
**dadurch gekennzeichnet,**
**dass** die Lippen (13) schräg verlaufend oder quer zur Einführungsrichtung liegend angeordnet sind und/oder dass der Neigungswinkel der Lippen (13) bei den gegenüberliegenden Haltemitteln (5, 6) sich in derart ergänzt, dass sich die Lippen (13) mit ihren Vorderkanten (30) gegenseitig berühren oder in den Zwischenräumen zu liegen kommen.

5. Halterung nach einem oder mehreren der Ansprüche 1 bis 4,
**dadurch gekennzeichnet,**
**dass** die Haltemittel (5,6) auf den Klemmflächen flächenbündig oder in einer Vertiefung einliegend befestigt, beispielsweise aufgeklebt, sind.

6. Halterung nach einem oder mehreren der Ansprüche 1 bis 5,
**dadurch gekennzeichnet,**
**dass** der Trägerkörper (2) einerseits zur Aufnahme der Haltemittel (5,6) und andererseits zur Aufnahme einer Klemmvorrichtung (4) zur Aufnahme und Halterung von runden oder eckigen Gegenständen vorgesehen ist.

7. Halterung nach einem oder mehreren der Ansprüche 1 bis 6,
**dadurch gekennzeichnet,**
**dass** der Trägerkörper (2) aus einer oberen Abdeckplatte (3) und einem unteren Bodenteil (17) besteht, welche durch Klemmmittel zusammengehalten sind, wobei das Bodenteil (17) und/oder die Abdeckplatte (3) eine Ausnehmung aufweisen, die nach dem Zusammenbau eine Schlitzführung bilden und innerhalb der Schlitzführung die beiden Klemmflächen ausgebildet sind.

8. Halterung nach Anspruch 7,
**dadurch gekennzeichnet,**
**dass** die Abdeckplatte (3) und das Bodenteil (17) durch am Rand verteilt liegende hakenförmige Vorsprünge oder Stifte, welche in korrespondierende Ausnehmungen (9,10) oder Bohrungen einrasten, zusammengehalten sind.

9. Halterung nach Anspruch 6,
**dadurch gekennzeichnet,**
**dass** die Klemmvorrichtung (4) zur Aufnahme und Halterung von runden oder eckigen Gegenständen, beispielsweise Schreibgeräten, Werkzeugen, Zahnbürsten, Nassrasierer, Nagelfeilen oder dergleichen vorgesehen ist und aus einer Trägerplatte (20) besteht, auf der sich zwei Klemmelemente (22,23) befinden, wovon mindestens ein Klemmelement (22,23) verschiebbar und federbeaufschlagt gelagert ist und wobei die Trägerplatte (20) und das zumindest eine Klemmelement (22,23) korrespondierende Führungsmittel aufweisen.

10. Halterung nach Anspruch 9,
**dadurch gekennzeichnet,**
**dass** die Trägerplatte (20) und der Trägerkörper (2) einstückig oder zweiteilig ausgebildet sind oder dass die Trägerplatte (20) der Klemmvorrichtung (4) in einem Durchbruch (11) einklebbar oder einklemmbar aufgenommen ist.

11. Halterung nach einem oder mehreren der Ansprüche 6 bis 10,
**dadurch gekennzeichnet,**
**dass** auf der Trägerplatte (20) der Klemmvorrichtung (4) zumindest zwei Klemmbacken (22,23) angeordnet sind, die einander gegenüber stehen und sich in einer Ruheposition zumindest im unteren Bereich teilweise berühren, von denen mindestens eine unter Federvorspannung in mindestens einer Führung verschiebbar gelagert ist.

12. Halterung nach einem oder mehreren der Ansprüche 6 bis 11,
**dadurch gekennzeichnet,**
**dass** die Führung der Klemmbacken (22,23) aus einem Führungssockel und/oder einer erhabenen Führungsfläche, beispielsweise einem Wulst (24) auf der Trägerplatte (20) besteht, wobei der Führungssockel in mindestens eine Nut oder einen Schlitz der Trägerplatte (20) eingreift und der Führungssockel mindestens zwei entgegengesetzt ausgerichtete Haltekrallen aufweist, die die Nut oder den Schlitz hintergreifen oder dass der Führungssockel einen Gleitschuh, eine Dreieck- oder Schwalbenschwanzführung aufweist und die Nut oder der Schlitz eine korrespondierende Aufnahmefläche aufweist.

13. Halterung nach einem oder mehreren der Ansprüche 6 bis 12,
**dadurch gekennzeichnet,**
**dass** die Führung der Klemmbacken (22,23) zusätzlich aus mindestens einer Bohrung in dem Quersteg oder dem Führungssockel besteht und mindestens einen in dem Trägerplatte (20) gelagerten Bolzen, auf dem die zumindest eine Klemmbacke (22,23) hin und her gleitet.

14. Halterung nach einem oder mehreren der Ansprüche 6 bis 13,
**dadurch gekennzeichnet,**
**dass** die Klemmbacken (22,23) zwei sich gegenüberliegend und spiegelbildlich ausgebildete Innenflächen (26) aufweisen, die zur Bewegungsrichtung des aufzunehmenden Gegenstandes hin in eine Abschrägung (28) aufweisen und im mittleren Bereich (27) rund, eckig oder eliptisch ausgeformt sind, wobei im Übergangsbereich zwischen der Abschrägung und dem ausgeformten Bereich eine Verengung (29) ausgebildet ist.

15. Halterung nach einem oder mehreren der Ansprüche 6 bis 14,
**dadurch gekennzeichnet,**
**dass** für die Federvorspannung zumindest eine Feder vorgesehen ist, die in der Führung zwischen den Konsolen oder den Führungssockeln und einer Stützkonsole oder dem Stützrand der Trägerplatte (20) angeordnet ist.

## Claims

1. Holding device (1) for spherical and flat objects, consisting of two opposing spaced clamping faces held by a carrier body (2) or being part of the carrier body (2), **characterized in that** the clamping faces comprise holding means (5, 6) in the form of a flat basic body (12) with several lips (13) formed at the body (12), the lips (13) having straight front edges extending in parallel to the basic body (12), the front edges being formed continuously or discontinuously and the front edges (30) of the opposing lips (13) being in contact with each other or coming to lie between the lips (13) in a staggered manner.

2. Holding device according to claim 1, **characterized in that** the lips (13) are integrally connected with the basic body (12).

3. Holding device according to claim 1 or 2, **characterized in that** the lips (13) are designed so as to extend in parallel, in an undulating or in a zigzag manner, the distances between adjacent lips (13) being invariable, and/or that the lips (13) are arranged perpendicularly to the basic body (12) or at an angle of 20 to 50 degree.

4. Holding device according to claims 1, 2, or 3, **characterized in that** the lips (13) are arranged so as to extend diagonally or transversely to the direction of insertion and/or that the angle of inclination of the lips (13) in the opposing holding means (5, 6) is supplementary in such a way that the front edges (30) of the lips (13) are in contact with each other or come to lie in the spaces.

5. Holding device according to one or more of claims 1 to 4, **characterized in that** the holding means (5, 6) are attached, for example glued, on the clamping faces so as to be flush with the surface or to be embedded in an indentation.

6. Holding device according to one or more of claims 1 to 5, **characterized in that** the carrier body (2) is provided on the one hand for receiving the holding means (5, 6) and on the other hand for receiving a clamping device (4) for receiving and holding round or angular objects.

7. Holding device according to one or more of claims 1 to 6, **characterized in that** the carrier body (2) consists of an upper cover plate (3) and a lower bottom part (17) which are held together by means of clamping means, the bottom part (17) and/or the cover plate (3) comprising a recess forming a slot guidance after their assembly and that the two clamping faces are formed within the slot guidance.

8. Holding device according to claim 7, **characterized in that** the cover plate (3) and the bottom part (17) are held together by hooklike projections or pins distributed at the edge and being locked in corresponding recesses (9, 10) or bores.

9. Holding device according to claim 6, **characterized in that** the clamping device (4) is provided for receiving and holding round or angular objects, for example writing implements, tools, tooth brushes, wet razors, nailfiles or the like, and consists of a carrier plate (20) on which two clamping elements (22, 23) are located, of which at least one clamping element (22, 23) is held to be shifted and spring-loaded, and wherein the carrier plate (20) and the at least one clamping element (22, 23) comprise corresponding guiding means.

10. Holding device according to claim 9, **characterized in that** the carrier plate (20) and the carrier body (2) are designed in one piece or in two pieces, or that the carrier plate (20) of the clamping device (4) is received in an opening (11) and can be glued or clamped into the same.

11. Holding device according to one or more of claims 6 to 10, **characterized in that** at least two clamping jaws (22, 23) are arranged on the carrier plate (20) of the clamping device (4), the clamping jaws (22, 23) opposing one another and, in a neutral position, contacting each other at least in the lower portion, at least one of the clamping jaws (22, 23) being held in at least one guidance under spring tension so as to be shifting.

12. Holding device according to one or more of claims 6 to 11, **characterized in that** the guidance of the clamping jaws (22, 23) consists of a guidance base and/or a raised guidance face, for example a swelling (24) on the carrier plate (20), the guidance base engaging at least one groove or slot of the carrier plate (20) and the guidance base comprising at least two oppositely oriented holding claws gripping behind the groove or the slot, or that the guidance base comprises a sliding block, a triangular or a dovetailed guidance, and the groove or the slot comprises a corresponding retainer face.

13. Holding device according to one or more of claims 6 to 12, **characterized in that** the guidance of the clamping jaws (22, 23) additionally consists of at least one bore in the transverse web or the guidance base and at least one pin held in the carrier plate (20) on which the at least one clamping jaw (22, 23) slides so as to reciprocate.

14. Holding device according to one or more of claims 6 to 13, **characterized in that** the clamping jaws (22, 23) comprise two opposing and mirror-inverted internal surfaces (26) comprising a bevel (28) towards the moving direction of the object to be received and have a round, angular or elliptic design in the central region (27), in the transition region between the bevel and the shaped region a narrowing (29) being formed.

15. Holding device according to one or more of claims 6 to 14, **characterized in that** at least one spring is provided for the spring tension, the spring being arranged in the guidance between the consoles or the guidance bases and a support console or the support edge of the carrier plate (20).

## Revendications

1. Support (1) pour objets sphériques et plats, composé de deux surfaces de serrage opposées distantes l'une de l'autre, tenues par un élément porteur (2) ou constituant une partie de l'élément porteur (2),
**caractérisé par le fait que** les surfaces de serrage présentent des moyens de maintien (5, 6) sous la forme d'un élément de base plat (12) avec plusieurs lèvres rapportées par formage (13) possédant des arêtes frontales alignées et parallèles à l'élément de base, les arêtes frontales étant réalisées de façon continue ou discontinue et les lèvres (13) opposées se trouvant en contact mutuel par l'intermédiaire de leurs arêtes frontales (30) ou allant se loger en décalé entre les lèvres (13).

2. Support selon la revendication 1,
**caractérisé par le fait que** les lèvres (13) sont liées à l'élément de base (12) en un seul tenant.

3. Support selon la revendication 1 ou 2,
**caractérisé par le fait que** les lèvres (13) sont formées de lignes parallèles, ondulées ou en zigzag, les distances entre les lèvres voisines (13) restant constantes et/ou que les lèvres (13) sont disposées à la verticale ou dans un angle de 20 à 50 degrés par rapport à l'élément de base (12).

4. Support selon la revendication 1, 2 ou 3,
**caractérisé par le fait que** les lèvres (13) partent en diagonale partent en biais ou sont disposées transversalement au sens d'introduction et/ou que l'angle d'inclinaison des lèvres (13) se complète de telle manière au niveau des moyens de maintien opposés (5, 6) que les lèvres (13) se trouvent en contact mutuel par l'intermédiaire de leurs arêtes frontales (30) ou viennent se loger dans les interstices.

5. Support selon une ou plusieurs des revendications 1 à 4,
**caractérisé par le fait que** les moyens de maintien (5, 6) sont fixés, par exemple collés, à fleur sur les surfaces de serrage ou logés dans un évidement.

6. Support selon une ou plusieurs des revendications 1 à 5,
**caractérisé par le fait que** l'élément porteur (2) est destiné d'une part à la réception des moyens de maintien (5, 6) et d'autre part à la réception d'un dispositif de serrage (4) pour recevoir et tenir des objets ronds ou angulaires.

7. Support selon une ou plusieurs des revendications 1 à 6,
**caractérisé par le fait que** l'élément porteur (2) se compose d'une plaque de recouvrement supérieure (3) et d'un partie de base inférieure (17), fixées l'une à l'autre par des moyens de serrage, la partie de base (17) et/ou la plaque de recouvrement (3) présentant un creux, formant après l'assemblage un guide à fente et les deux surfaces de serrage étant formées à l'intérieur du guide à fente.

8. Support selon la revendication 7,
**caractérisé par le fait que** la plaque de recouvrement (3) et la partie de base (17) sont fixées l'une à l'autre par des picots ou des parties en saillie en forme de crochet dispersés sur le bord, s'engageant dans les creux (9, 10) ou les trous correspondants.

9. Support selon la revendication 6,
**caractérisé par le fait que** le dispositif de serrage (4) est destiné à la réception et au maintien d'objets ronds ou angulaires, par exemple des crayons, outils, brosses à dents, rasoirs à main, limes à ongles ou objets similaires et se compose d'une plaque de support (20) sur laquelle se trouvent deux éléments de serrage (22, 23), dont au moins un élément de serrage (22, 23) est mobile et amorti sur ressort, la plaque de support (20) et au moins un élément de serrage (22, 23) présentant des moyens de guidage correspondants.

10. Support selon la revendication 9,
**caractérisé par le fait que** la plaque de support (20) et l'élément porteur (2) sont formés en un seul tenant ou en deux pièces ou que la plaque de support (20) du dispositif de serrage (4) peut être collée ou calée dans un orifice (11).

11. Support selon une ou plusieurs des revendications 6 à 10,
**caractérisé par le fait qu'**au moins deux mâchoires de serrage (22, 23) sont disposées sur la plaque de support (20) du dispositif de serrage (4), ces deux mâchoires se faisant face et se touchant en position de repos au moins dans la zone inférieure, dont une au moins est mobile et amortie par précontrainte de ressort dans au moins un guide.

12. Support selon une ou plusieurs des revendications 6 à 11,
**caractérisé par le fait que** le guide des mâchoires de serrage (22, 23) se compose d'un socle de guidage et/ou d'une surface de guidage en relief, par exemple un renflement (24) sur la plaque de support (20), le socle de guidage s'engrenant dans au moins une rainure ou une fente de la plaque de support (20) et le socle de guidage présentant au moins deux pattes de fixation orientés dans des sens opposés, s'agrippant dans la rainure ou la fente ou que le socle de guidage présente un patin de guidage, une glissière triangulaire ou en queue d'aronde et que la rainure ou la fente présente une surface de réception.

13. Support selon une ou plusieurs des revendications 6 à 12,
**caractérisé par le fait que** le guide des mâchoires de serrage (22, 23) se compose en outre d'au moins un trou dans la barre transversale ou dans le socle de guidage et d'au moins une cheville logée dans la plaque de support (20), sur lequel au moins une mâchoire de serrage (22, 23) coulisse dans un sens et dans l'autre.

14. Support selon une ou plusieurs des revendications 6 à 13,
**caractérisé par le fait que** les mâchoires de serrage (22, 23) présentent deux surfaces internes se faisant face formées symétriquement (26) présentant une zone en biseau vers le sens de déplacement de l'objet à recevoir (28) et façonnées dans la zone centrale (27) de façon arrondie, angulaire ou elliptique, un rétrécissement (29) étant formé dans la zone de jonction entre la zone en biseau et la zone façonnée.

15. Support selon une ou plusieurs des revendications 6 à 14,
**caractérisé par le fait que** pour la précontrainte de ressort il est prévu au moins un ressort, disposé dans le guide entre les consoles ou les socles de guidage et une console d'appui ou le rebord de la plaque de support (20).
